(19) Europäisches Patentamt
European Patent Office
Office européen des brevets

(11) **EP 4 667 970 A1**

(12) **EUROPEAN PATENT APPLICATION**

(43) Date of publication:
**24.12.2025 Bulletin 2025/52**

(21) Application number: **24217939.8**

(22) Date of filing: **06.12.2024**

(51) International Patent Classification (IPC):
**G01S 13/931** (2020.01)   **G01S 17/931** (2020.01)
**G06V 20/56** (2022.01)

(52) Cooperative Patent Classification (CPC):
**G01S 13/931; G01S 17/931; G06V 20/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.06.2024 KR 20240079468**

(71) Applicants:
• **Hyundai Motor Company
Seoul 06797 (KR)**

• **Kia Corporation
Seocho-gu
Seoul 06797 (KR)**

(72) Inventors:
• **KIM, Jang Yoon
18280 Hwaseong-si, Gyeonggi-do (KR)**
• **KIM, Jin Sol
18280 Hwaseong-si, Gyeonggi-do (KR)**

(74) Representative: **Isarpatent
Patent- und Rechtsanwälte
Barth Hassa Peckmann & Partner mbB
Friedrichstraße 31
80801 München (DE)**

(54) **VEHICLE OBJECT DETECTION DATA PROCESSING DEVICE AND METHOD**

(57)     An apparatus for controlling autonomous driving of a vehicle is introduced. The apparatus may comprise a sensor mounted at a reference point on the vehicle, configured to acquire sensing data. The apparatus may also comprise processors and a memory storing programs that, when executed, configured to cause the apparatus to generate a first cluster of points based on the reference point and sensing data, create a first range image based on the first cluster of points, produce a second range image based on a distance value and a virtual reference point on the ground, extract first and second areas from the range images, determine ground contact points, generate a third range image incorporating these areas, determine a third area with an object in the third range image, generate vehicle masking data based on the third area; and control autonomous vehicle driving based on a signal indicating the vehicle masking data.

FIG. 1

**Description**

TECHNICAL FIELD

One example of the present disclosure relates to a vehicle object detection data processing device and method, and more specifically, to a vehicle object detection data processing device and method for processing data from a LiDAR sensor mounted on a vehicle.

BACKGROUND

The matters described in this Background section are only for the enhancement of understanding of the background of the disclosure, and may not be taken as acknowledgment that they correspond to prior art already known to those skilled in the art.

An autonomous vehicle may use sensors such as LiDAR, cameras, radar, etc. to detect objects in a surrounding environment of the vehicle, establish an autonomous driving strategy based on the detected results, and control vehicle components such as steering, brakes, and driving parts according to the autonomous driving strategy to perform autonomous driving.

In autonomous vehicles, object detection using LiDAR is useful, and the reliability of the detected results may influence the reliability of autonomous driving as a whole.

However, in a process of detecting objects, some LiDAR point clouds obtained using laser pulses reflected by a host vehicle become noise, and cause a decrease in reliability.

When LiDAR is installed to cover a host vehicle area to detect objects in an area close to the vehicle, sensing points obtained using laser pulses reflected by the vehicle may be recognized as noise that does not correspond to an actual surrounding environment. In addition, there is a problem that when laser pulses are reflected by the vehicle and points obtained using these pulses are recognized as noise, points may appear in locations where objects are not actually present, and when these points are imaged in 3D coordinates, actual points and noise points cannot be clearly distinguished.

SUMMARY

According to the present disclosure, an apparatus for controlling autonomous driving of a vehicle, the apparatus may comprise: a sensor mounted at a reference point on the vehicle, the sensor configured to acquire sensing data; one or more processors; and a memory storing one or more programs, that when executed by the one or more processors, are configured to cause the apparatus to: generate, based on the reference point and the sensing data, a first cluster of points; generate, based on the first cluster of points, a first range image; generate, based on a distance value and a virtual reference point on a ground, a second range image, wherein the virtual reference point is transformed from the reference point, wherein the distance value represents a distance between a pixel of the first range image and the ground, and wherein the virtual reference point is a center of the ground; extract, based on the first range image and the second range image, a first area and a second area, wherein a contact point with the ground is absent in the first area, and wherein a contact point with the ground is present in the second area; generate a third range image, wherein the third range image may comprise the extracted first area and second area; determine a third area in the third range image, wherein an object is present in the third area; generate, based on the third area, vehicle masking data; generate a signal indicating the vehicle masking data; and control, based on the signal, autonomous driving of the vehicle.

The apparatus, wherein the one or more programs, when executed by the one or more processors, are configured to cause the apparatus to remove noise by applying the vehicle masking data to second sensing data acquired from the sensor.

The apparatus, wherein the one or more programs, when executed by the one or more processors, are configured to cause the apparatus to: generate, based on the second sensing data, a second cluster of points; generate, based on the second cluster of points, a fourth range image; overlap the vehicle masking data on the fourth range image and remove a vehicle area from the fourth range image; and transform the fourth range image from which the vehicle area has been removed into a third cluster of points.

The apparatus, wherein the one or more programs, when executed by the one or more processors, are configured to cause the apparatus to generate, based on a plurality of pieces of consecutive sensing data acquired from the sensor, the vehicle masking data.

The apparatus, wherein the one or more programs, when executed by the one or more processors, are configured to cause the apparatus to: generate a plurality of pieces of vehicle masking candidate data for each of the plurality of pieces of consecutive sensing data; and generate the vehicle masking data by comparing areas corresponding to a portion of the object, wherein the areas overlap in the plurality of pieces of vehicle masking candidate data.

The apparatus, wherein the one or more programs, when executed by the one or more processors, are configured to cause the apparatus to generate the vehicle masking data by extracting pixels of the areas, wherein the areas appear at a rate higher than or equal to a preset rate across the plurality of pieces of masking candidate data. The apparatus, wherein the plurality of pieces of consecutive sensing data are acquired while the vehicle is traveling.

The apparatus, wherein the one or more programs, when executed by the one or more processors, are configured to cause the apparatus to generate, based on multiple pieces of sensing data, the vehicle masking data for each sensor of a plurality of sensors, wherein the multiple pieces of sensing data are acquired from a first sensor, a second sensor, a third sensor, and a fourth sensor of the plurality of sensors, and wherein: the first sensor is mounted on a roof of the vehicle, the second sensor is mounted on a rear surface of the vehicle, the third sensor is mounted on a left surface of the vehicle, and the fourth sensor is mounted on a right surface of the vehicle.

The apparatus, wherein the one or more programs, when executed by the one or more processors, are configured to cause the apparatus to generate the first range image by applying spherical projection to the first cluster of points.

The apparatus, wherein the one or more programs, when executed by the one or more processors, are configured to cause the apparatus to adjust a size of the first range image based on at least one of an angle of view or a resolution of the sensor.

According to the present disclosure, a method performed by an apparatus for controlling autonomous driving of a vehicle, the method may comprise: generating, based on a reference point and sensing data acquired from a sensor mounted at the reference point on the vehicle, a first cluster of points; generating, based on the first cluster of points, a first range image; generating, based on a distance value and a virtual reference point on a ground, a second range image, wherein the virtual reference point is transformed from the reference point, wherein the distance value represents a distance between a pixel of the first range image and the ground, and wherein the virtual reference point is a center of the ground; extracting, based on the first range image and the second range image, a first area and a second area, wherein a contact point with the ground is absent in the first area, and wherein a contact point with the ground is present in the second area; generating a third range image, wherein the third range image may comprise the extracted first area and second area; determining a third area in the third range image, wherein an object is present in the third area; generating, based on the third area, vehicle masking data; generating a signal indicating the vehicle masking data; and controlling, based on the signal, autonomous driving of the vehicle.

The method may further comprise removing noise by applying the vehicle masking data to second sensing data acquired from the sensor. The method, wherein removing the noise may comprise: generating, based on the second sensing data, a second cluster of points; generating, based on the second cluster of points, a fourth range image; overlapping the vehicle masking data on the fourth range image and removing a vehicle area from the fourth range image; and transforming the fourth range image from which the vehicle area has been removed into a third cluster of points.

The method may further comprise generating, based on a plurality of pieces of consecutive sensing data acquired from the sensor, the vehicle masking data. The method, wherein generating the vehicle masking data may comprise: generating a plurality of pieces of vehicle masking candidate data for each of the plurality of pieces of consecutive sensing data; and generating the vehicle masking data by comparing areas corresponding to a portion of the object, wherein the areas overlap in the plurality of pieces of vehicle masking candidate data.

The method, wherein generating the vehicle masking data may comprise generating the vehicle masking data by extracting pixels of the areas, wherein the areas appear at a rate higher than or equal to a preset rate across the plurality of pieces of masking candidate data. The method, wherein the plurality of pieces of consecutive sensing data are acquired while the vehicle is traveling.

The method, wherein the vehicle masking data is generated, based on multiple pieces of sensing data, for each sensor of a plurality of sensors, wherein the multiple pieces of sensing data are acquired from a first sensor, a second sensor, a third sensor, and a fourth sensor of the plurality of sensors, and wherein: the first sensor is mounted on a roof of the vehicle, the second sensor is mounted on a rear surface of the vehicle, the third sensor is mounted on a left surface of the vehicle, and the fourth sensor is mounted on a right surface of the vehicle. The method, wherein generating the first range image may comprise applying spherical projection to the first cluster of points. The method may further comprise, after generating the first range image, adjusting a size of the first range image based on at least one of an angle of view or a resolution of the sensor.

BRIEF DESCRIPTION OF THE DRAWINGS

The above and other objects, features and advantages of the present disclosure will become more apparent to those of ordinary skill in the art by describing examples thereof in detail with reference to the accompanying drawings, in which:

FIG. 1 shows an exemplary diagram of a vehicle object detection data processing device according to an example;

FIG. 2 shows an example of a configuration of the vehicle object detection data processing device according to the example;

FIG. 3 shows an example of an operation of the vehicle object detection data processing device according to the example;

FIG. 4 shows an example of an operation of a first processing unit according to an example;

FIG. 5 and FIG. 6 are examples of an operation of a second processing unit according to an example

FIG. 7, FIG. 8, and FIG. 9 are examples of an operation of a third processing unit according to an example;

FIG. 10, FIG. 11, and FIG. 12 are examples of an operation of a fourth processing unit according to an example;

FIG. 13 shows an example of an operation of a fifth processing unit according to an example;

FIG. 14 shows an example of an operation of the vehicle object detection data processing device according to the example;

FIG. 15 shows an example of an operation of a vehicle object detection data processing device according to another example;

FIG. 16 shows an example of a vehicle object detection data processing method according to an example;

FIG. 17 shows an example of a vehicle object detection data processing method according to another example; and

FIG. 18 shows an example of a vehicle object detection data processing method according to an example.

DETAILED DESCRIPTION

Hereinafter, exemplary examples of the present disclosure will be described in detail with reference to the accompanying drawings.

However, the technical spirit of the present disclosure is not limited to some examples which will be described and may be implemented in a variety of different forms, and one or more components of the examples may be selectively combined, substituted, and used within the range of the technical spirit of the present disclosure.

In addition, unless clearly and specifically defined otherwise by the context, all terms (including technical and scientific terms) used herein can be interpreted as having meanings customarily understood by those skilled in the art, and the meanings of generally used terms, such as those defined in commonly used dictionaries, will be interpreted in consideration of contextual meanings of the related art.

In addition, the terms used in the examples of the present disclosure are considered in a descriptive sense only and not to limit the present disclosure.

In the present specification, unless specifically indicated otherwise by the context, singular forms include plural forms, and in a case in which "at least one (or one or more) among A, B, and C" is described, this may include at least one combination among all possible combinations of A, B, and C. For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

In addition, in descriptions of components of the present disclosure, terms such as "first," "second," "A," "B," "(a)," and "(b)" may be used.

The terms are only to distinguish one component from another component, and the essence, order, and the like of the components are not limited by the terms.

In addition, it may be understood that, when a first component is referred to as being "connected" or "coupled" to a second component, such a description may include both a case in which the first component is directly connected or coupled to the second component, and a case in which the first component is connected or coupled to the second component with a third component disposed therebetween.

In addition, when a first component is described as being formed or disposed "on" or "under" a second component, such a description includes both a case in which the two components are formed or disposed in direct contact with each other and a case in which one or more other components are interposed between the two components. In addition, when the first component is described as being formed "on or under" the second component, such a description may include a case in which the first component is formed at an upper side or a lower side with respect to the second component.

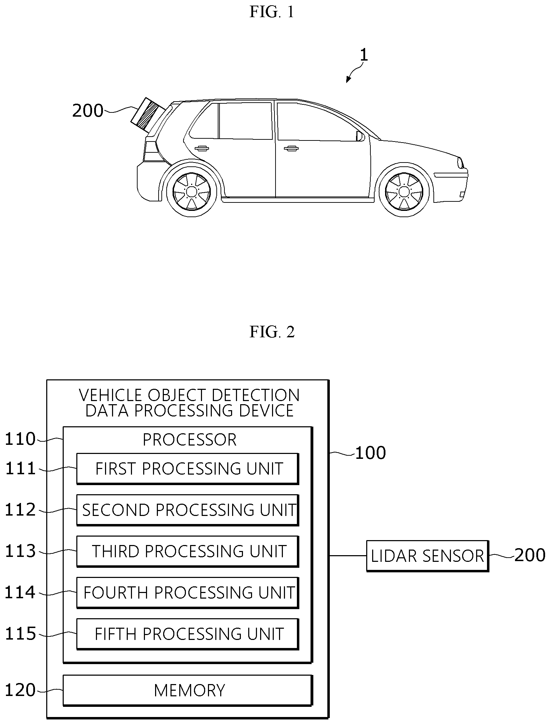

FIG. 1 shows an exemplary diagram of a vehicle object detection data processing device according to an example. Referring to FIG. 1, in the example, respective components may have different functions and capabilities in addition to those described below, and may include additional components in addition to those described below. In addition, in an example, each configuration may be implemented using one or more physically separate devices, or may be implemented by one or more processors or a combination of one or more processors and software. Unlike the example shown, each configuration does not need to be clearly distinguished in terms of specific operations.

A sensor (e.g., LiDAR sensor 200) mounted on a vehicle 1 may sense information such as a distance to an object, a direction or speed of the object, etc. by emitting a laser pulse to the object and then measuring a return time of the laser pulse reflected from the object within a measurement range. Here, the object may be another vehicle, a person, or an object present outside the vehicle. For example, a sensor may be camera, LIDAR sensor 200, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, or throttle position sensor, etc. for example, for autonomous driving control of a vehicle.

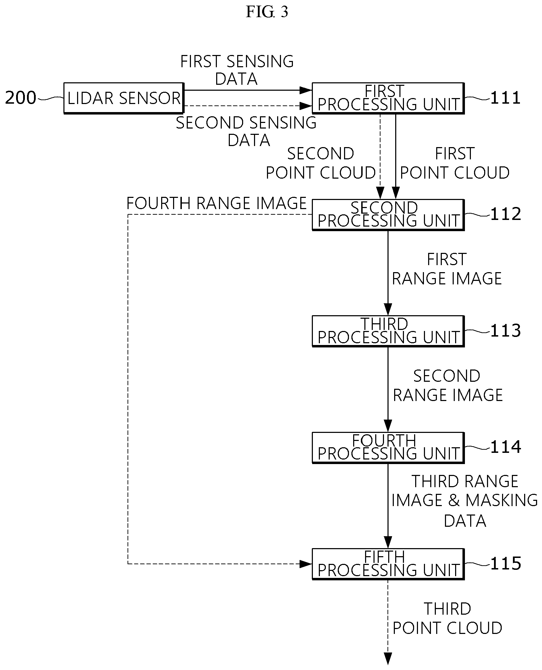

FIG. 2 shows an example of a configuration of the vehicle object detection data processing device according to the example and FIG. 3 shows an example of an operation of the vehicle object detection data processing device according to the example.

Referring to FIGS. 2 and 3, a vehicle object detection data processing device 100 may include a processor 110 and a memory 120. The vehicle object detection data processing device 100 according to the example may be implemented in a logic circuit using hardware, firmware, software, or a combination thereof, and may be implemented using a general-purpose or special-purpose computer. The vehicle object detection data processing device may be implemented using hardwired devices, field programmable gate arrays (FPGAs), application specific integrated circuits (ASICs), etc. In addition, the vehicle object detection data processing device 100 may be implemented as a system on chip (SoC) including one or more processors and a controller.

In addition, the vehicle object detection data processing device 100 may be installed on a computing device or server equipped with hardware elements in the form of software, hardware, or a combination thereof. The computing device or server may be any of a variety of devices including the entirety or part of a communication device such as a communication modem for performing communication with various devices or wired and wireless communication networks, a memory that stores data for executing programs, and a microprocessor for executing the programs to perform computations and instructions.

In addition, the processor 110 according to the example may include a first processing unit 111, a second processing unit 112, a third processing unit 113, a fourth processing unit 114, and a fifth processing unit 115.

The LiDAR sensor 200 may output sensing results as sensing data. LiDAR sensing data may be output in the form of cluster of points (e.g., point cloud) data including a plurality of points for a single object. For example, a point cloud may comprise a collection of data points in a three-dimensional coordinate system, representing the external surface of an object or environment. Each point in the cloud may have its own set of X, Y, and Z coordinates, and/or additional information (e.g., color or intensity). Point clouds may be typically generated by 3D scanners, LiDAR, or photogrammetry techniques, and may be used in various applications such as 3D modeling, computer vision, and/or robotics, etc. They may provide a highly detailed and/or accurate representation of complex surfaces and/or structures, making them ideal for tasks like object recognition, environment mapping, and/or digital reconstruction, etc.

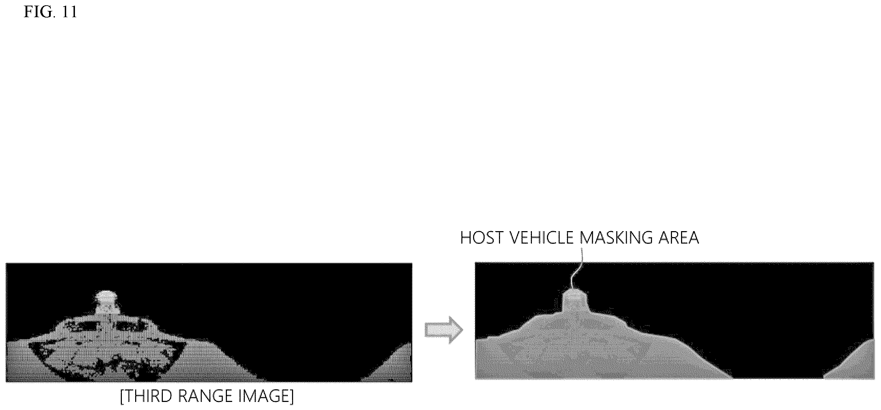

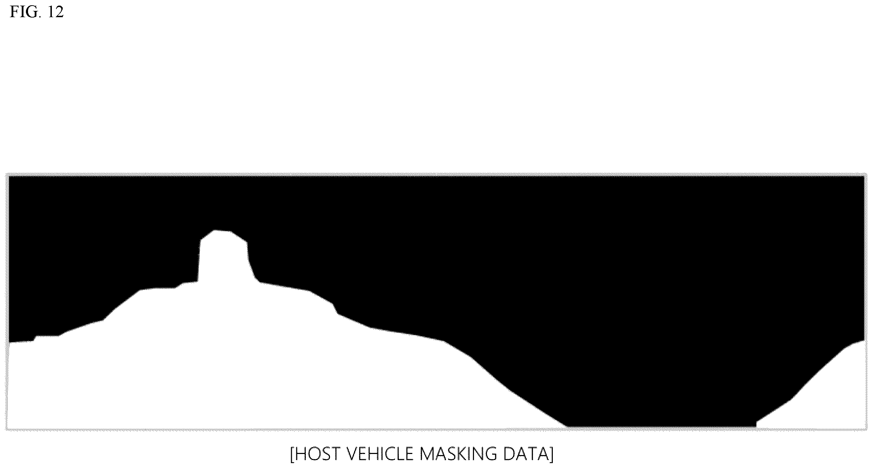

The first processing unit 111 may use first sensing data acquired from the LiDAR sensor mounted on a vehicle to generate a first point cloud based on a reference point of the LiDAR sensor. The first processing unit 111 may be implemented by being included in the LiDAR sensor 200 or may be implemented through a separate device. In the example, the first sensing data may be LiDAR data acquired under a controlled environment in order to acquire host vehicle masking data. The host vehicle masking data may refer to a method of identifying and excluding the area occupied by the host vehicle in range images to ensure that the vehicle itself does not interfere with the analysis of the surrounding environment. This process may involve creating a contour around the detected vehicle area and applying masking to remove or ignore this section in the range image data, as further described in FIG. 11 and FIG. 12.

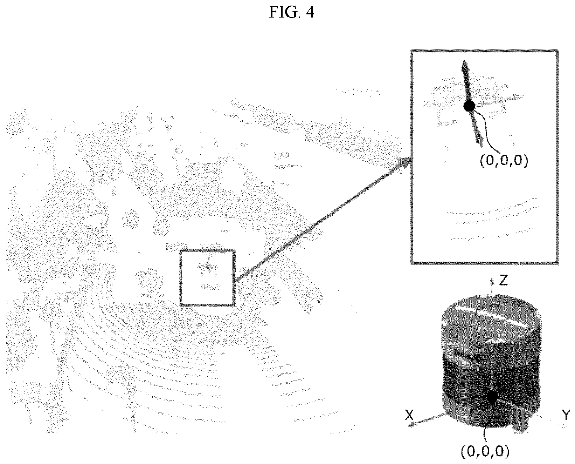

FIG. 4 shows an example of an operation of a first processing unit according to an example. Referring to FIG. 4, the first processing unit 111 may select valid data from among point data received from the LiDAR sensor 200 and preprocess the valid data into data with a form that can be processed by the device vehicle object detection data processing device. The first processing unit 111 may transform the sensing data to fit a reference coordinate system according to a position angle at which the LiDAR sensor 200 is mounted, and filter points having low intensity or reflectance using the intensity or confidence information of the sensing data. The first processing unit 111 may perform segmentation on the speed, location, etc. of the point data in a process of preprocessing the point data. The segmentation may be a process of recognizing what kind of point each piece of point data is. Since this preprocessing process of the sensing data is intended to refine valid data, part or all of the preprocessing process may be omitted or another processing process may be added.

The first point cloud may be generated on a three-dimensional coordinate system with a center point of the LiDAR sensor 200 as a reference point ((x, y, z) = (0, 0, 0)). Raw data acquired through the LiDAR sensor 200 goes through a preprocessing process, and through this preprocessing process, the sensing data is calibrated based on the reference point of the vehicle's LiDAR sensor 200, and invalid data among the raw data is removed. For example, the reference point of the LiDAR sensor 200 may be a central point of a location where the LiDAR sensor 200 is mounted, and may be a center point of a vehicle bumper or a center point of a vehicle roof.

Sensing data for a plurality of layers may be acquired from LiDAR points obtained through a plurality of channels, and the number of layers may be smaller than the number of channels. As an example, sensing point data of each layer may be obtained by dividing all channels into sets equal to the number of layers and projecting point data of the channels belonging to each set onto the layers defined for the corresponding set.

In this case, a process of obtaining a plurality of pieces of layer data from a plurality of pieces of channel data may be performed on raw data, but may be performed on valid data that has gone through the preprocessing process.

The sensing data may be acquired in the form of a clustered point cloud, and a coordinate system of the point cloud may be set so that a traveling direction of the vehicle is set in the x-axis direction, a rearward line of the vehicle is adjacent to the y-axis, and a height is set in the z-axis direction.

The point cloud is a set of data on the coordinate system, is defined by x, y, and z coordinates in a three-dimensional coordinate system, and mostly represents an external surface of an object.

In some cases, the operation of the first processing unit 111 may be performed by the LiDAR sensor 200, and in this case, data output from the LiDAR sensor may be the first point cloud.

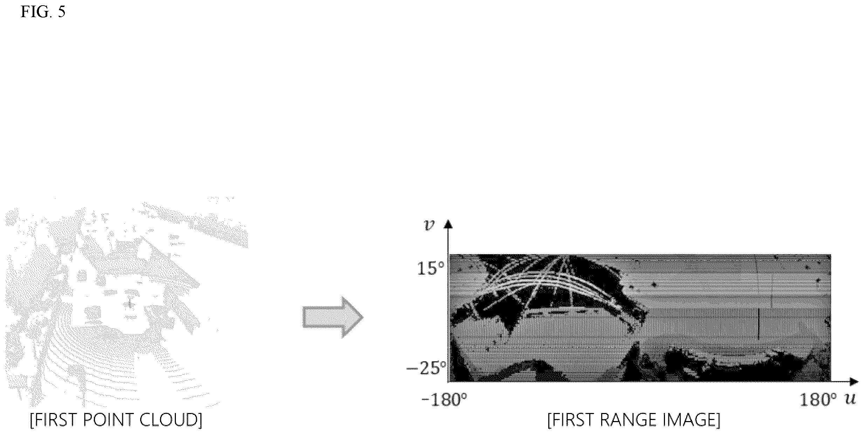

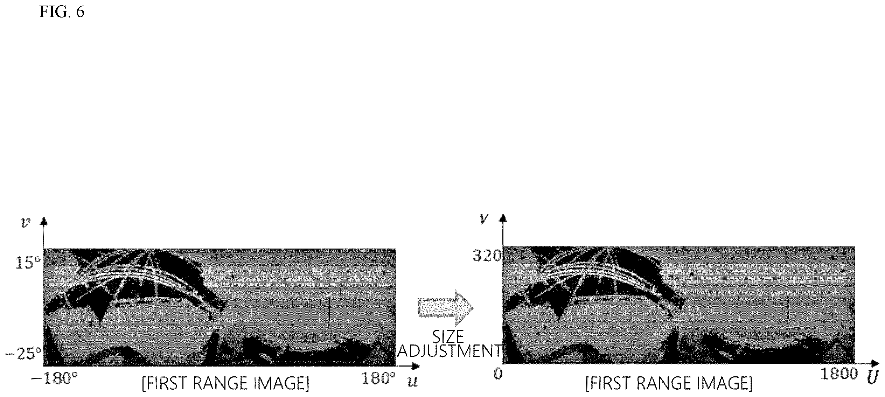

FIGS. 5 and 6 are examples of an operation of a second processing unit according to an example. Referring to FIG. 5, the second processing unit 112 may generate a first range image using the first point cloud. The second processing unit 112 may generate the first range image by applying spherical projection to the first point cloud. A range image is a two-dimensional representation derived from three-dimensional point cloud data, generated by a sensor (e.g., LiDAR) or other depth-sensing technologies. It maps the distance (or range) of objects from the sensor into a grid format, where each pixel corresponds to a specific angular position and contains information about the distance (or intensity) of the closest object detected in that direction. FIG. 5 shows an example of transformation of a point cloud into a range image using spherical projection. This may involve converting the 3D coordinates of points in the point cloud into a 2D image format where pixel values represent distance. FIG. 6 shows an example of size adjustment of the range image based on the sensor's angle of view and resolution, showing an example of how the image dimensions may be scaled.

The second processing unit 112 may generate a range image based on a 3D point cloud. An entire 3D LiDAR point cloud may be projected as a sphere onto an intermediate 2D pseudo-image, referred to as a range image. When a plurality of points are projected onto the same location, an attribute of a point that is the closest to the range image may be selected. The range image includes five feature channels, and may be expressed as (d, i, x, y, z). Here, d is a distance of a returned point, and i is the intensity of the returned point, x, y, and z may be Cartesian coordinates of the returned point expressed within a LiDAR reference frame. In the example, the feature channel may be configured using the distance d of the returned point.

The second processing unit 112 may generate a first range image by transforming any point (x, y, z) of the first point cloud generated in the LiDAR coordinate system according to Equation 1 below. That is, the first range image may be a set of pixels at coordinates (u, v). Pixel (u, v) represents a specific point in a range image that is defined by horizontal coordinate (u) and vertical coordinate (v). The horizontal coordinate (u) corresponds to an angle with the field of view (FOV) horizontally, ranging from, for example, -180° to 180°, and represents an angle at which a sensor (e.g., LiDAR) detects the point. The vertical coordinate (v) corresponds an angle within a vertical FOV, ranging, for example, -25° to 15°, and represents a vertical angle at which the sensor detects the point. The following equation shows how the horizontal and vertical angles are converted into a pixel position in the range image:

[Equation 1]

$$u = \arctan\left(\frac{x}{y}\right)$$

$$v = \arcsin\left(\frac{z}{d}\right) \quad \left(d = \sqrt{x^2 + y^2 + z^2}\right)$$

Referring to FIG. 6, the second processing unit 112 may adjust a size of the first range image according to at least one of an angle of view and resolution of the LiDAR sensor 200. The second processing unit 112 may adjust the size of the first range image according to the specifications of the LiDAR sensor 200. The second processing unit 112 may adjust the scale or range of the u-axis (horizontal axis) and v-axis (vertical axis) of the range image using the angle of view and resolution of the LiDAR sensor 200. For example, the coordinates of each pixel of the range image may be adjusted according to the angle of view and resolution using Equation 2 below.

[Equation 2]

$$U = \frac{(u - u_{min})}{R_H} = 5u$$

$$V = \frac{(v - v_{min})}{R_V} = 8 \times (v + 25)$$

The second processing unit 112 may generate the first range image having information on a width W, a height H, and a distance d for each pixel using Equations 1 and 2.

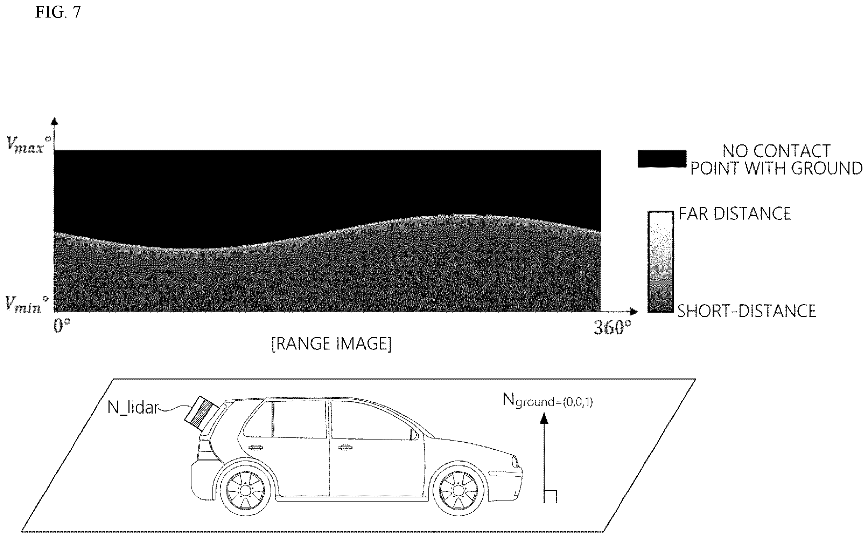

FIGS. 7 to 9 are examples of an operation of a third processing unit according to an example. FIG. 7 shows an example of a process of transforming and analyzing LiDAR data to identify ground contact points and measure distances from a vehicle's LiDAR sensor. In FIG. 7, the range image may visualize the ground and surrounding environment as sensed by a sensor (e.g., LiDAR). FIG. 7 shows a 360-degree horizontal view (from 0° to 360°) with vertical angles ranging between $V_{min}$ and $V_{max}$. This range image may use a gradient to differentiate distances. For example, darker areas may indicate regions where there is no contact point with the ground. Light to medium areas may depict varying distances, with lighter shades representing closer objects and darker shades representing farther objects. FIG. 7 also shows a vehicle equipped with a LiDAR sensor, highlighting the LiDAR's orientation ($N_{lidar}$) and its interaction with a ground reference point ($N_{ground} = (0,0,1)$), and describes how the vehicle's LiDAR sensor data is transformed into a virtual reference point on the ground, using the normal vector of the ground ($N_{ground}$) to create a coordinate system aligned with the ground surface. FIG. 7 shows how the sensor data is processed to map the environment, identify ground contact points, and represent distance variations, using a transformation of the sensor's coordinate system to align with the ground reference. This helps in understanding the vehicle's surroundings and more accurately detecting objects and terrain features. Referring to FIG. 7, the third processing unit 113 may transform a reference point $N_{lidar}$ of the LiDAR sensor 200 into a virtual reference point $N_{ground}$ on the ground. The virtual reference point $N_{ground}$ is any point on the ground and may be expressed in three-dimensional coordinates. The virtual reference point may have a normal vector of (0, 0, 1). The third processing unit 113 may translate and rotate the coordinate system with the reference point $N_{lidar}$ of the LiDAR sensor 200 as the origin to transform the coordinate system with the reference point $N_{lidar}$ of the LiDAR sensor 200 into a coordinate system with the virtual reference point $N_{ground}$ on the ground as the origin.

The third processing unit 113 may perform coordinate transformation using Equation 3 below.

In Equation 3, X, Y, and Z represent a set of point clouds as a matrix, and [R|t] is an extrinsic matrix that may transform the coordinates of the origin as a reference point of the LiDAR sensor into the coordinates of the origin as a virtual reference point on the ground with the normal vector of (0, 0, 1). X', Y', and Z' may be the coordinates of the first point cloud with the virtual reference point set as the origin by being subjected to coordinate transformation by the extrinsic matrix.

[Equation 3]

$$[R \mid t] \times \begin{bmatrix} X \\ Y \\ Z \\ 1 \end{bmatrix} = \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \times \begin{bmatrix} X \\ Y \\ Z \\ 1 \end{bmatrix}$$

$$= \begin{bmatrix} r_{11}X + r_{12}Y + r_{13}Z + t_1 \\ r_{21}X + r_{22}Y + r_{23}Z + t_2 \\ r_{13}X + r_{23}Y + r_{33}Z + t_3 \end{bmatrix} = \begin{bmatrix} X' \\ Y' \\ Z' \end{bmatrix} \quad \left( \begin{bmatrix} x_1 & \cdots & x_n \\ y_1 & \cdots & y_n \\ z_1 & \cdots & z_n \end{bmatrix} = \begin{bmatrix} X \\ Y \\ Z \end{bmatrix} \right)$$

In the example, the extrinsic matrix is a matrix that transforms the first coordinate system to the second coordinate system, the matrix t is a transition vector indicating how much to translate from the first coordinate system to the second coordinate system, and the matrix R is a rotation matrix that represents directions of coordinate axes of the first coordinate system within the second coordinate system. An inverse matrix for the extrinsic matrix may be a matrix that transforms the second coordinate system into the first coordinate system. As described above, in the example, the first coordinate system may be a coordinate system that uses the reference point of the LiDAR sensor 200 as the origin, and the second coordinate system may be a coordinate system that uses the virtual reference point on the ground as the origin.

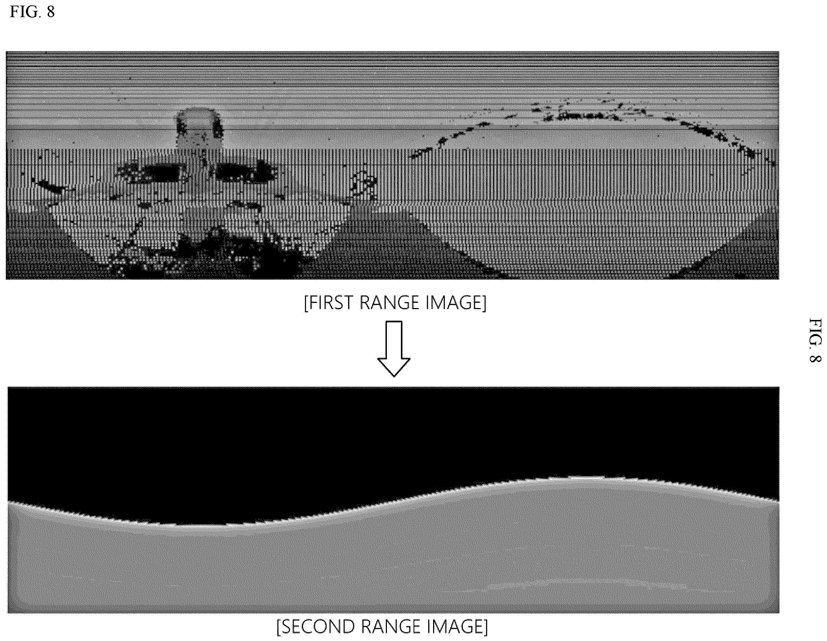

Referring to FIG. 8, the third processing unit 113 may generate a second range image by determining a distance value between each pixel of the first range image and the ground with the virtual reference point as a center. The third processing unit 113 may model a virtual ground in a coordinate system with the virtual reference point as the center and then generate a second range image showing a distance value between a virtual ground and the LiDAR sensor.

The third processing unit 113 may determine unit vectors W, Y, and Z on 3D coordinates for the coordinates (u, v) of any pixel of the first range image as shown in Equation 4 below. In Equation 4 below, d=1.

[Equation 4]

$$X = \cos(u)\sqrt{d^2 - Z^2} = \cos(u)\sqrt{1 - Z^2}$$
$$Y = \tan(u)\,X$$
$$Z = d * v = v$$

The third processing unit 113 may determine a plane equation ($ax + by + cz + d = 0$) by transforming a flat ground having a normal vector of (0, 0, 1) into the LiDAR coordinate system through inverse transformation of the extrinsic matrix defined in Equation 3 as shown in Equation 5 below.

[Equation 5]

$$Ax + By + Cz = 0 * x + 0\ * y + 1 * z = 0$$

$$\rightarrow 1 * (r_{31}x + r_{32}y + r_{33}z + t_3) = ax + by + cz + d = 0$$

The third processing unit 113 may determine a parameter t that satisfies matters described below for the plane equation ax + by + cz + d = 0 and each unit vector X, Y, and Z according to Equation 6 below.

[Equation 6]

$$aXt + bYt + cZt + d = 0$$

$$\rightarrow t = -\frac{d}{aX + bY + cZ}$$

The parameter t calculated from Equation 6 is used to express whether each pixel of the second range image intersects with the ground. If the t value is 0 or less (t≤0), it may mean that the pixel is a pixel that does not have a contact point with the ground in the corresponding direction, and if the t value is greater than 0, it may mean that the pixel is a pixel that has a contact point with the ground in the corresponding direction. If the t value is 0 or less, the third processing unit 113 may set a value of the corresponding pixel to 0. If the t value is greater than 0, the third processing unit 113 may determine a distance value D between the corresponding pixel and the ground according to Equation 7 below and define the distance value D as a pixel value.

[Equation 7]

$$D = \sqrt{(Xt)^2 + (Yt)^2 + (Zt)^2}$$

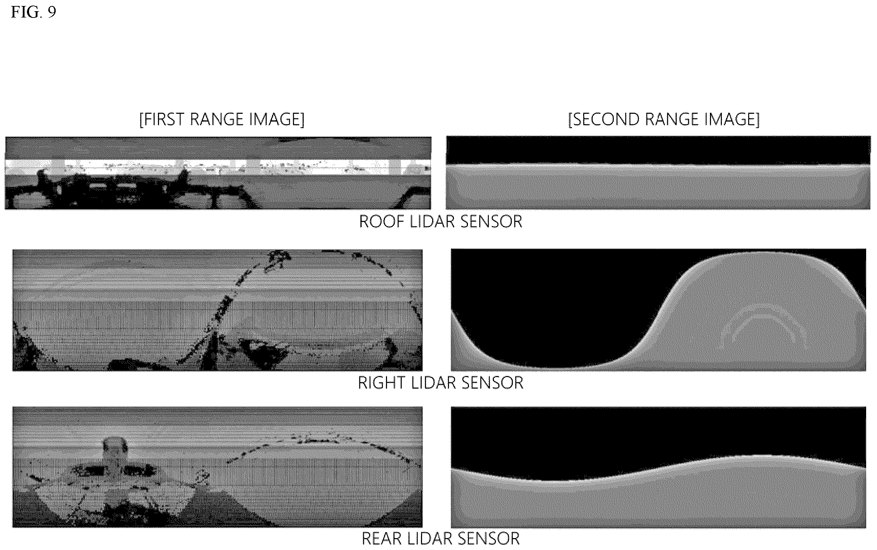

Referring to FIG. 9, the third processing unit 113 may generate a second range image for each LiDAR sensor using each piece of sensing data received from the roof LiDAR sensor, the right LiDAR sensor, and the rear LiDAR sensor. The second range image for each LiDAR sensor may be used to mask the sensing data received from each LiDAR sensor, as will be described below.

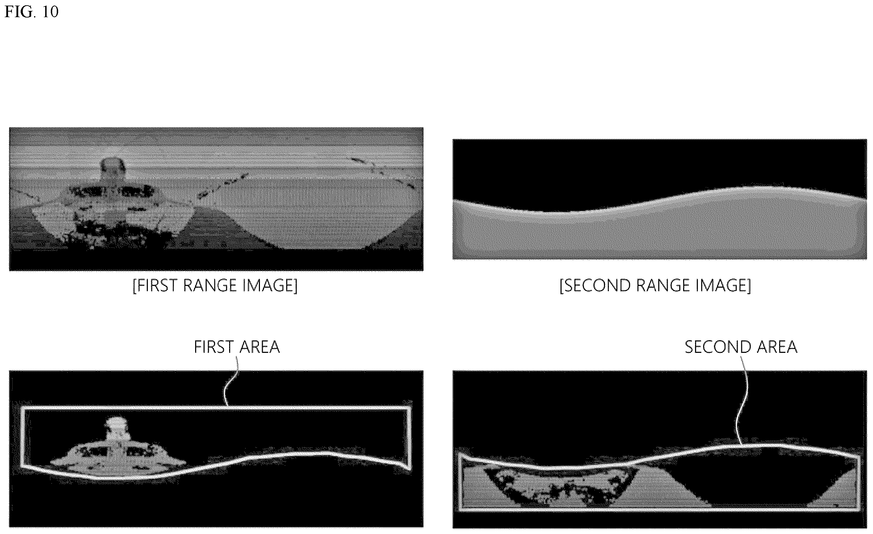

FIGS. 10 to 12 are examples of an operation of a fourth processing unit according to an example. Referring to FIG. 10, the fourth processing unit 114 may extract a first area where a contact point with the ground is not present and a second area where a contact point with the ground is present using the first range image and the second range image.

The fourth processing unit 114 may divide an area of which the t value is 0 and an area of which the t value is not 0 based on the second range image, and extract the first area and the second area by reflecting the divided areas in the first range image.

The fourth processing unit 114 may extract a pixel having a distance value smaller than a short-distance discrimination parameter value of the first range image from the area having the t value of 0 as the first area. The short-distance discrimination parameter value is a preset value and may be set according to the maximum distance between the LiDAR sensor and the vehicle.

The fourth processing unit 114 may extract, as the second area, an area that is closer by a preset rate or more compared to the distance to the ground from among areas having the t value that is not 0. The preset rate may be set as a hyper-parameter according to the surrounding environment and conditions.

FIG. 11 shows an example of a third range image where the host vehicle's area is identified and then masked. This may be done by detecting the host vehicle's contour and applying masking, which may prevent the vehicle's structure from being included in the environment analysis. FIG. 12 shows an example of the result of the masking operation, where the host vehicle area is clearly marked and excluded, showing only the relevant environmental data outside of the vehicle's space. Referring to FIGS. 11 and 12, the fourth processing unit 114 may generate a third range image including the extracted first area and second area, and detect an area where an object is present in the third range image to generate host vehicle masking data. The fourth processing unit 114 may define a contour encompassing the area where the object is determined to be present in the third range image, determine the corresponding contour to be a host vehicle area, and generates the host vehicle masking data to which data masking is applied so that the host vehicle area may be masked. For example, the fourth processing unit 114 may generate the host vehicle masking data using the Concave Hull algorithm using Alpha Shape.

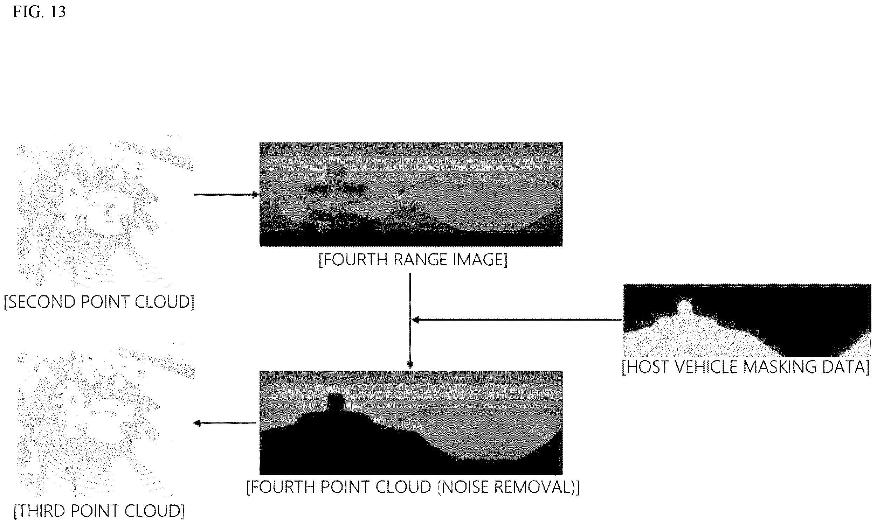

FIG. 13 shows an example of how a system uses host vehicle masking data to filter out unnecessary elements (like the vehicle's own reflection in the data), enhancing the clarity and accuracy of the sensing data for autonomous vehicle navigation and object detection. FIG. 13 shows an example of an operation of a fifth processing unit that may apply the host vehicle masking data to refine LiDAR sensing data for autonomous driving applications according to an example. The operation may start with a Second Point Cloud and a Third Point Cloud, both representing data collected by the LiDAR sensor from the environment around the vehicle, and generate the fourth range image from the second point cloud and the third point cloud. The host vehicle masking data, previously generated to identify and exclude the host vehicle's area, is applied to the Fourth Range Image. This step may remove the portion of the data that corresponds to the vehicle itself, ensuring that only external objects and obstacles remain in the processed image. The output may be a Fourth Point Cloud (Noise Removal), which is a cleaned version of the point cloud data where noise (i.e., the vehicle's own structure) has been removed. This refined point cloud is used to focus solely on detecting and analyzing nearby objects in the autonomous driving environment. Referring to FIG. 13, the fifth processing unit 115 may remove noise by applying the host vehicle masking data to second sensing data acquired from the LiDAR sensor 200. In the example, the second sensing data may be data acquired from the LiDAR sensor 200 in order to detect nearby objects in an actual autonomous driving environment.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver if the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., features of removing noise by vehicle masking data) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., features of removing noise by vehicle masking data) described herein.

One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., features of removing noise by vehicle masking data) described herein.

Minimum risk maneuver (MRM) operation(s) may also be controlled, for example, based on one or more features (e.g., features of removing noise by vehicle masking data) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle if a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., features of removing noise by vehicle masking data) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes.

This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc. One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., features of removing noise by vehicle masking data) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

The fifth processing unit 115 may generate a second point cloud using the second sensing data and generate a fourth range image using the second point cloud.

A process of generating the fourth range image using the second sensing data is the same as the process of generating the first range image using the first sensing data described above, and redundant descriptions thereof will be omitted.

The fifth processing unit 115 may remove the host vehicle area from the fourth range image by overlapping the host vehicle masking data on the fourth range image. The fifth processing unit 115 may remove pixels corresponding to the host vehicle area from the fourth range image by masking the host vehicle area of the host vehicle masking data in the fourth range image.

The fifth processing unit 115 may transform the fourth range image from which the host vehicle area has been removed into a third point cloud and generate point cloud data with noise for the host vehicle area removed. A process of transforming the fourth range image into the third point cloud may be performed through the process of transforming the coordinates of each pixel (u, v) on the fourth range image from which the host vehicle area has been removed into the three-dimensional coordinates of the point cloud.

The vehicle object detection data processing device 100 according to the example may perform masking processing of removing the host vehicle area from the range image input from the same LiDAR sensor 200 using the host vehicle masking data.

The generated host vehicle masking data may be used semi-permanently to remove the host vehicle area from subsequently acquired sensing data. However, if the detection environment or conditions of the LiDAR sensor 200 change, such as replacement or a change in the mounting location of the LiDAR sensor 200, a process of newly generating host vehicle masking data may be performed.

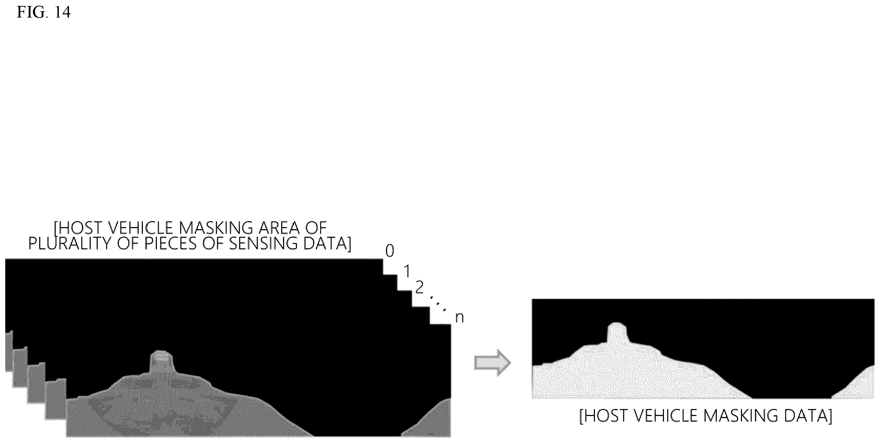

FIG. 14 shows an example of an operation of the vehicle object detection data processing device according to the example. Referring to FIG. 14, the vehicle object detection data processing device according to the example may generate host vehicle masking data using a plurality of pieces of consecutive first sensing data acquired from the LiDAR sensor.

In the example, LiDAR sensing data may be acquired at predetermined time intervals. The sensing data may be acquired at, for example, 10 frames per second. Here, the sensing data at the current time may be the sensing data of the last acquired frame, and the sensing data at the previous time may be data of a plurality of frames from the current time to the previous reference time.

The LiDAR sensing data may be sensing data acquired while the vehicle is traveling. The LiDAR sensing data may be sensing data acquired while the vehicle is traveling at a constant speed. The LiDAR sensing data may be sensing data acquired while the vehicle is traveling at a constant acceleration.

The processor generates a plurality of pieces of host masking candidate data for each of a plurality of pieces of consecutive first sensing data, and generate host vehicle masking data by comparing, for each pixel, areas where areas with an object overlap in the plurality of pieces of host masking candidate data. A process of generating the first range image to third range image using each piece of first sensing data is the same as that of FIGS. 4 to 11, and redundant descriptions thereof will be omitted.

The processor may generate the host vehicle masking data by extracting pixels in which the areas where the areas with an object overlap appear at a rate higher than or equal to a preset rate from the plurality of pieces of host masking candidate data.

In the example, the host masking candidate data may be used with the same meaning as the third image generated from the first sensing data acquired at a specific point in time, and the processor may detect pixels or areas where objects are repeatedly detected in the plurality of third images.

That is, the processor may generate the third image from a plurality of pieces of first sensing data acquired from a traveling vehicle, and detect pixels where objects are detected in the third images at a rate higher than or equal to a preset rate from among the plurality of third images. The processor may determine the detected pixels to be the host vehicle area. The processor defines a contour encompassing the detected pixels, determines that the contour is a host vehicle area, and generates host vehicle masking data to which data masking is applied so that the host vehicle area may be masked.

The processor may generate the third image from a plurality of pieces of first sensing data acquired from a vehicle traveling at a constant speed and detect the pixels where objects are detected in the third image at a rate higher than or equal to a preset rate among the plurality of third images. The processor may determine the detected pixels to be the host vehicle area. The processor defines a contour encompassing the detected pixels, determines that the contour is a host vehicle area, and generates host vehicle masking data to which data masking is applied so that the host vehicle area may be masked.

The processor may generate the third image from a plurality of pieces of first sensing data acquired from a vehicle traveling at a constant acceleration and detect the pixels where objects are detected in the third image at a rate higher than or equal to a preset rate among the plurality of third images. The processor may determine the detected pixels to be the host vehicle area. The processor defines a contour encompassing the detected pixels, determines that the contour is a host vehicle area, and generates host vehicle masking data to which data masking is applied so that the host vehicle area may be masked.

In the example, the preset rate may be set to 30%, but is not limited thereto, and may be set differently depending on the driving environment and conditions of the vehicle. In the traveling environment for generating the host vehicle masking data, there may be no nearby objects, or environmental conditions that reflect LiDAR signals, such as puddles of water, may be eliminated. However, even under these environmental conditions, the reliability of the host vehicle masking data may be improved through settings such as increasing the number of pieces of first sensing data or increasing an overlap setting rate.

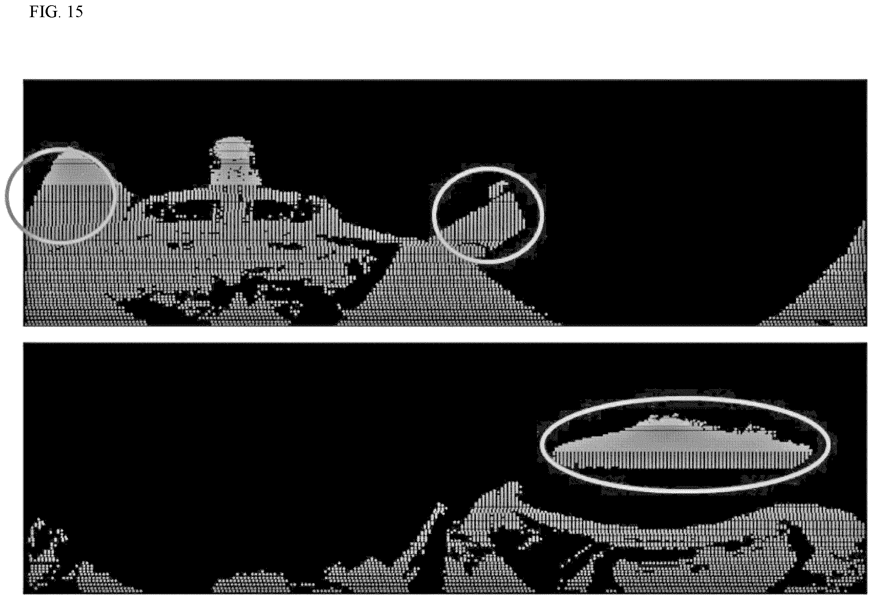

FIG. 15 shows an example of an operation of a vehicle object detection data processing device according another example. Referring to 15, when a nearby object is present, the nearby object may be recognized as a host vehicle area, as indicated by a circled area in the range image, and reduce the accuracy of host vehicle masking data. However, as described above, when detecting only pixels in which objects are detected at a preset rate of about 30% or more in the third image generated under the conditions where the vehicle is traveling and masking the pixels as the host vehicle area, these problems may be solved.

That is, in the example, the reliability of the vehicle object detection data processing device may be improved by acquiring a plurality of pieces of first sensing data from a traveling vehicle and determining the area repeatedly detected as an object in the third image generated from the plurality of pieces of first sensing data as the host vehicle area. In addition, confusion caused by other noise such as nearby objects or puddles of water may be prevented.

The host vehicle masking data according to the example may be generated to correspond to each LiDAR sensor using sensing data acquired from the first LiDAR sensor mounted on the roof of the vehicle, the second LiDAR sensor mounted on the rear of the vehicle, the third LiDAR sensor mounted on the left surface of the vehicle, and the fourth LiDAR sensor mounted on the right surface of the vehicle.

The processor may remove noise by applying host vehicle masking data corresponding to second sensing data acquired from each LiDAR sensor. For example, the processor may remove noise from the second sensing data acquired from the first LiDAR sensor using the host vehicle masking data acquired through the first LiDAR sensor. For example, the processor may remove noise from the second sensing data acquired from the second LiDAR sensor using the host vehicle masking data acquired through the second LiDAR sensor. For example, the processor may remove the noise from the second sensing data acquired from the third LiDAR sensor using the host vehicle masking data acquired through the third LiDAR sensor. For example, the processor may remove the noise from the second sensing data acquired from the fourth LiDAR sensor using the host vehicle masking data acquired through the fourth LiDAR sensor.

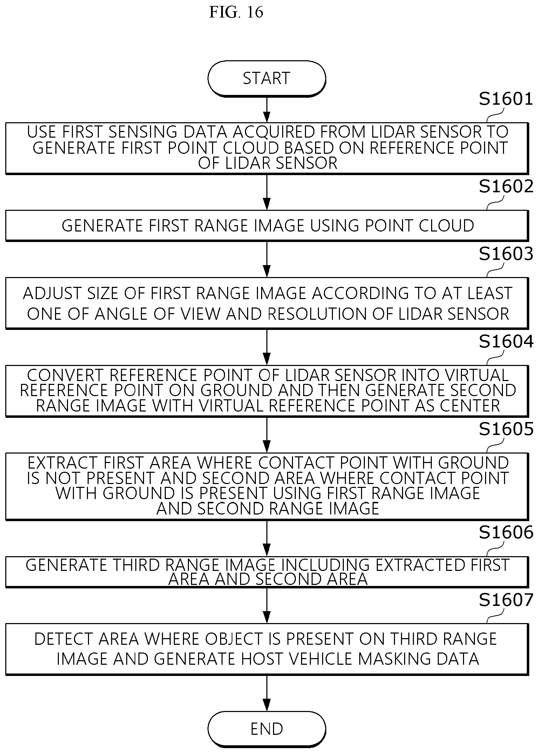

For convenience, FIG. 16, FIG. 17, and FIG. 18 are described by way of an example in which the steps are performed by a processor. One, some, or all steps of FIG. 16, FIG. 17, and FIG. 18, or portions thereof, may be performed by one or more other circuits. One or some, steps of FIG. 16, FIG. 17, and FIG. 18 may be omitted, performed in other orders, and/or otherwise modified, and/or one or more additional steps may be added.

FIG. 16 shows an example of a vehicle object detection data processing method according to an example.

Referring to FIG. 16, the processor uses first sensing data acquired from the LiDAR sensor mounted on the vehicle to generate a first point cloud based on a reference point of the LiDAR sensor (S1601).

Next, the processor generates a first range image using the point cloud (S 1602).

Next, the processor adjusts a size of the first range image according to at least one of an angle of view and resolution of the LiDAR sensor. Depending on an example, an operation of adjusting the first range image size may be omitted (S1603).

Next, the processor transforms the reference point of the LiDAR sensor into a virtual reference point on the ground and then determines a distance value between each pixel of the first range image and the ground with the virtual reference point as a center to generate a second range image (S1604).

Next, the processor extracts a first area where a contact point with the ground is not present and a second area where a contact point with the ground is present using the first range image and the second range image (S1605).

Next, the processor generates a third range image including the extracted first area and second area (S1606).

Next, the processor detects an area where an object is present in the third range image and generates host vehicle masking data (S1607).

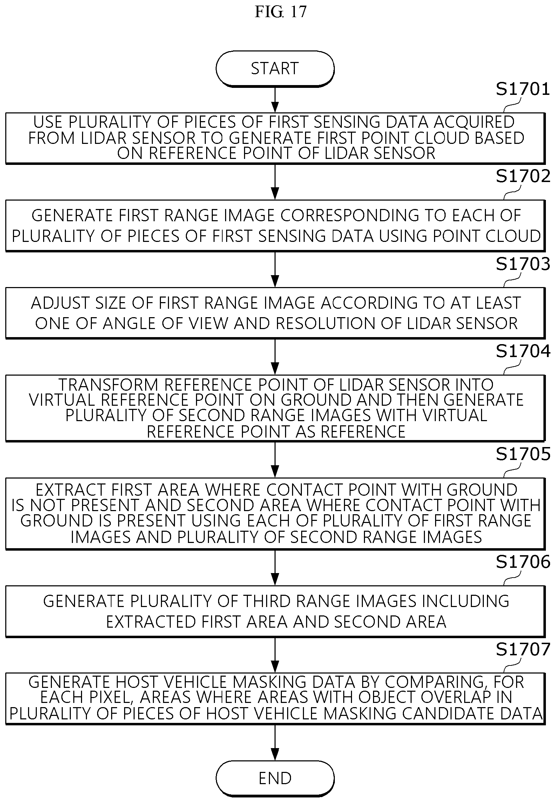

FIG. 17 shows an example of a vehicle object detection data processing method according to another example.

Referring to FIG. 17, the processor uses a plurality of pieces of first sensing data acquired from the LiDAR sensor mounted on the vehicle to generate a first point cloud based on the reference point of the LiDAR sensor (S1701).

Next, the processor generates a first range image corresponding to each of the plurality of pieces of first sensing data using the point cloud (S1702).

Next, the processor adjusts a size of the first range image according to at least one of an angle of view and resolution of the LiDAR sensor. Depending on an example, an operation of adjusting the first range image size may be omitted (S 1703).

Next, the processor transforms the reference point of the LiDAR sensor into a virtual reference point on the ground and then determines a distance value between each pixel of a plurality of first range images and the ground with the virtual reference point as a reference to generate a plurality of second range images (S1704).

Next, the processor extracts a first area where a contact point with the ground is not present and a second area where a contact point with the ground is present using each of the plurality of first range images and the plurality of second range images (S 1705).

Next, the processor generates a plurality of third range images including the extracted first area and second area. The plurality of third range images are used as a plurality of host vehicle masking candidates (S 1706).

Next, the processor generates host vehicle masking data by comparing, for each pixel, areas, wherein the areas comprise an object (e.g., parts of the host vehicle) and overlap in a plurality of pieces of host vehicle masking candidate data. The processor generates host vehicle masking data by extracting pixels in which the areas where the areas with the object overlap appear at a rate higher than or equal to a preset rate from the plurality of pieces of host masking candidate data (S 1707). By identifying areas that consistently overlap across the plurality of pieces of host vehicle masking candidate data, the processor may create a more accurate and reliable host vehicle masking data. This masking data may exclude the host vehicle, allowing the processor to focus only on objects and obstacles outside the vehicle.

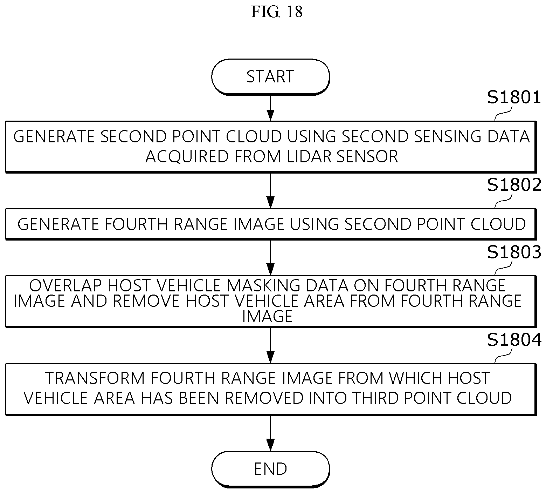

FIG. 18 shows an example of a vehicle object detection data processing method according to an example.

Referring to FIG. 18, the processor generates a second point cloud using second sensing data acquired from the LiDAR sensor (S1801).

Next, the processor generates a fourth range image using the second point cloud (S1802).

Next, the processor overlaps host vehicle masking data on the fourth range image and removes a host vehicle area from the fourth range image (S1803).

Next, the processor transforms the fourth range image from which the host vehicle area has been removed into a third point cloud (S1804).

The present disclosure is directed to providing a vehicle object detection data processing device and method capable of performing accurate object detection by removing noise from LiDAR point clouds.

According to an example of the present disclosure, there is provided a vehicle object detection data processing device including one or more processors and a memory storing one or more programs executed by the one or more processors, in which the processor generates a first point cloud based on a reference point of a LiDAR sensor mounted on a vehicle using first sensing data acquired from the LiDAR sensor, generates a first range image using the first point cloud, transforms the reference point of the LiDAR sensor into a virtual reference point on a ground, and then determines a distance value between each pixel of the first range image and the ground with the virtual reference point as a center to generate a second range image, extracts a first area where a contact point with the ground is not present and a second area where a contact point with the ground is present using the first range image and the second range image, generates a third range image including the extracted first area and second area, and detects an area where an object is present in the third range image and generates host vehicle masking data.

The processor may remove noise by applying the host vehicle masking data to second sensing data acquired from the LiDAR sensor.

The processor may generate a second point cloud using the second sensing data, generate a fourth range image using the second point cloud, overlap the host vehicle masking data on the fourth range image and removes a host vehicle area from the fourth range image, and transform the fourth range image from which the host vehicle area has been removed into a third point cloud.

The processor may generate the host vehicle masking data using a plurality of pieces of consecutive first sensing data acquired from the LiDAR sensor.

The processor may generate a plurality of pieces of host vehicle masking candidate data for each of the plurality of pieces of consecutive first sensing data, and generate the host vehicle masking data by comparing, for each pixel, areas where the areas with the object overlap in the plurality of pieces of host vehicle masking candidate data.

The processor may generate the first range image by applying spherical projection to the first point cloud.

The processor may adjust a size of the first range image according to at least one of an angle of view and resolution of the LiDAR sensor.

According to another example of the present disclosure, there is provided a vehicle object detection data processing method performed by a computing device that includes one or more processors and a memory storing one or more programs executed by the one or more processors, the vehicle object detection data processing method including generating a first point cloud based on a reference point of a LiDAR sensor mounted on a vehicle using first sensing data acquired from the LiDAR sensor, generating a first range image using the first point cloud, transforming the reference point of the LiDAR sensor into a virtual reference point on the ground, and then determining a distance value between each pixel of the first range image and the ground with the virtual reference point as a center to generate a second range image, extracting a first area where a contact point with the ground is not present and a second area where a contact point with the ground is present using the first range image and the second range image, generating a third range image including the extracted first area and second area, and detecting an area where an object is present in the third range image and generating host vehicle masking data.

The vehicle object detection data processing method may further include removing noise by applying the host vehicle masking data to second sensing data acquired from the LiDAR sensor.

The removing of the noise may include generating a second point cloud using the second sensing data, generating a fourth range image using the second point cloud, overlapping the host vehicle masking data on the fourth range image and removing a host vehicle area from the fourth range image, and transforming the fourth range image from which the host vehicle area has been removed into a third point cloud.

The vehicle object detection data processing method may further include generating the host vehicle masking data using a plurality of pieces of consecutive first sensing data acquired from the LiDAR sensor.

The generating of the host vehicle masking data may include generating a plurality of pieces of host vehicle masking candidate data for each of the plurality of pieces of consecutive first sensing data, and generating the host vehicle masking data by comparing, for each pixel, areas where the areas with the object overlap in the plurality of pieces of host vehicle masking candidate data.

The generating of the host vehicle masking data may include generating the host vehicle masking data by extracting pixels in which the areas where the areas with the object overlap appear at a rate higher than or equal to a preset rate from the plurality of pieces of host masking candidate data.

The plurality of pieces of consecutive first sensing data may be acquired while the vehicle is traveling.

The host vehicle masking data may be generated for each LiDAR sensor using sensing data acquired from a first LiDAR sensor mounted on a roof of the vehicle, a second LiDAR sensor mounted on a rear surface of the vehicle, a third LiDAR sensor mounted on a left surface of the vehicle, and a fourth LiDAR sensor mounted on a right surface of the vehicle.

In the generating of the first range image, the first range image may be generated by applying spherical projection to the first point cloud.

The vehicle object detection data processing method may further include, after the generating of the first range image, adjusting a size of the first range image according to at least one of an angle of view and resolution of the LiDAR sensor.

A vehicle object detection data processing device and method according to an example can prevent object detection performance from being degraded due to noise that can be generated from a LiDAR mounted on a vehicle.

In addition, a vehicle object detection data processing device and method according to an example can filter a host vehicle portion of the LiDAR with various positions and calibrations without separate manual work through a generated noise removal function.

While the present disclosure has been mainly described above with reference to examples, it will be understood by those skilled in the art that the present disclosure is not limited to the examples, and various modifications and applications, which are not exemplified above, may be made within the range of the present disclosure without departing from the features of the present examples. For example, components specifically described in the examples may be implemented with modifications. In addition, it may be interpreted that differences related to such modifications and applications fall within the scope of the present disclosure defined by the appended claims.

**Claims**

1. An apparatus for controlling autonomous driving of a vehicle, the apparatus comprising:

   a sensor mounted at a reference point on the vehicle, the sensor configured to acquire sensing data;
   one or more processors; and
   a memory storing one or more programs, that when executed by the one or more processors, are configured to cause the apparatus to:

   generate, based on the reference point and the sensing data, a first cluster of points;
   generate, based on the first cluster of points, a first range image;
   generate, based on a distance value and a virtual reference point on a ground, a second range image, wherein the virtual reference point is transformed from the reference point, wherein the distance value represents a distance between a pixel of the first range image and the ground, and wherein the virtual reference point is a center of the ground;
   extract, based on the first range image and the second range image, a first area and a second area, wherein a contact point with the ground is absent in the first area, and wherein a contact point with the ground is present in the second area;
   generate a third range image, wherein the third range image comprises the extracted first area and second area;
   determine a third area in the third range image, wherein an object is present in the third area;
   generate, based on the third area, vehicle masking data;
   generate a signal indicating the vehicle masking data; and
   control, based on the signal, autonomous driving of the vehicle.

2. The apparatus of claim 1, wherein the one or more programs, when executed by the one or more processors, are configured to cause the apparatus to remove noise by applying the vehicle masking data to second sensing data acquired from the sensor.

3. The apparatus of claim 2, wherein the one or more programs, when executed by the one or more processors, are configured to cause the apparatus to:

   generate, based on the second sensing data, a second cluster of points;
   generate, based on the second cluster of points, a fourth range image;
   overlap the vehicle masking data on the fourth range image and remove a vehicle area from the fourth range image; and
   transform the fourth range image from which the vehicle area has been removed into a third cluster of points.

4. The apparatus of claim 1, wherein the one or more programs, when executed by the one or more processors, are configured to cause the apparatus to generate, based on a plurality of pieces of consecutive sensing data acquired from the sensor, the vehicle masking data.

5. The apparatus of claim 4, wherein the one or more programs, when executed by the one or more processors, are configured to cause the apparatus to:

generate a plurality of pieces of vehicle masking candidate data for each of the plurality of pieces of consecutive sensing data; and
generate the vehicle masking data by comparing areas corresponding to a portion of the object, wherein the areas overlap in the plurality of pieces of vehicle masking candidate data.

6. The apparatus of claim 5, wherein the one or more programs, when executed by the one or more processors, are configured to cause the apparatus to generate the vehicle masking data by extracting pixels of the areas, wherein the areas appear at a rate higher than or equal to a preset rate across the plurality of pieces of masking candidate data.

7. The apparatus of claim 4, wherein the plurality of pieces of consecutive sensing data are acquired while the vehicle is traveling.

8. The apparatus of claim 1, wherein the one or more programs, when executed by the one or more processors, are configured to cause the apparatus to generate, based on multiple pieces of sensing data, the vehicle masking data for each sensor of a plurality of sensors, wherein the multiple pieces of sensing data are acquired from a first sensor, a second sensor, a third sensor, and a fourth sensor of the plurality of sensors, and wherein:

the first sensor is mounted on a roof of the vehicle,
the second sensor is mounted on a rear surface of the vehicle,
the third sensor is mounted on a left surface of the vehicle, and
the fourth sensor is mounted on a right surface of the vehicle.

9. The apparatus of claim 1, wherein the one or more programs, when executed by the one or more processors, are configured to cause the apparatus to generate the first range image by applying spherical projection to the first cluster of points.

10. The apparatus of claim 1, wherein the one or more programs, when executed by the one or more processors, are configured to cause the apparatus to adjust a size of the first range image based on at least one of an angle of view or a resolution of the sensor.

11. A method performed by an apparatus for controlling autonomous driving of a vehicle, the method comprising:

generating, based on a reference point and sensing data acquired from a sensor mounted at the reference point on the vehicle, a first cluster of points;
generating, based on the first cluster of points, a first range image;
generating, based on a distance value and a virtual reference point on a ground, a second range image, wherein the virtual reference point is transformed from the reference point, wherein the distance value represents a distance between a pixel of the first range image and the ground, and wherein the virtual reference point is a center of the ground;
extracting, based on the first range image and the second range image, a first area and a second area, wherein where a contact point with the ground is absent in the first area, and wherein a contact point with the ground is present in the second area;
generating a third range image, wherein the third range image comprises the extracted first area and second area;
determining a third area in the third range image, wherein an object is present in the third area;
generating, based on the third area, vehicle masking data;
generating a signal indicating the vehicle masking data; and
controlling, based on the signal, autonomous driving of the vehicle.

12. The method of claim 11, further comprising removing noise by applying the vehicle masking data to second sensing data acquired from the sensor.

13. The method of claim 12, wherein the removing the noise comprises:

generating, based on the second sensing data, a second cluster of points;
generating, based on the second cluster of points, a fourth range image;
overlapping the vehicle masking data on the fourth range image and removing a vehicle area from the fourth range image; and
transforming the fourth range image from which the vehicle area has been removed into a third cluster of points.

14. The method of claim 11, further comprising generating, based on a plurality of pieces of consecutive sensing data acquired from the sensor, the vehicle masking data.

15. The method of claim 14, wherein the generating the vehicle masking data comprises:

generating a plurality of pieces of vehicle masking candidate data for each of the plurality of pieces of consecutive sensing data; and
generating the vehicle masking data by comparing areas corresponding to a portion of the object, wherein the areas overlap in the plurality of pieces of vehicle masking candidate data.

16. The method of claim 15, wherein the generating the vehicle masking data comprises generating the vehicle masking data by extracting pixels of the areas, wherein the areas appear at a rate higher than or equal to a preset rate across the plurality of pieces of masking candidate data.

17. The method of claim 14, wherein the plurality of pieces of consecutive sensing data are acquired while the vehicle is traveling.

18. The method of claim 11, wherein the vehicle masking data is generated, based on multiple pieces of sensing data, for each sensor of a plurality of sensors, wherein the multiple pieces of sensing data are acquired from a first sensor, a second sensor, a third sensor, and a fourth sensor of the plurality of sensors, and wherein:

the first sensor is mounted on a roof of the vehicle,
the second sensor is mounted on a rear surface of the vehicle,
the third sensor is mounted on a left surface of the vehicle, and
the fourth sensor is mounted on a right surface of the vehicle.

19. The method of claim 11, wherein the generating the first range image comprises applying spherical projection to the first cluster of points.

20. The method of claim 11, further comprising, after the generating the first range image, adjusting a size of the first range image based on at least one of an angle of view or a resolution of the sensor.

FIG. 1

FIG. 2

FIG. 3

**200** — LIDAR SENSOR

FIRST SENSING DATA

SECOND SENSING DATA

FIRST PROCESSING UNIT — **111**

SECOND POINT CLOUD

FIRST POINT CLOUD

FOURTH RANGE IMAGE

SECOND PROCESSING UNIT — **112**

FIRST RANGE IMAGE

THIRD PROCESSING UNIT — **113**

SECOND RANGE IMAGE

FOURTH PROCESSING UNIT — **114**

THIRD RANGE IMAGE & MASKING DATA

FIFTH PROCESSING UNIT — **115**

THIRD POINT CLOUD

FIG. 4

FIG. 5

[FIRST RANGE IMAGE]

[FIRST POINT CLOUD]

FIG. 6

FIG. 7

[RANGE IMAGE]

FIG. 8

FIG. 8

[FIRST RANGE IMAGE]

[SECOND RANGE IMAGE]

FIG. 9

[FIRST RANGE IMAGE]

[SECOND RANGE IMAGE]

ROOF LIDAR SENSOR

RIGHT LIDAR SENSOR

REAR LIDAR SENSOR

FIG. 10

[FIRST RANGE IMAGE]

[SECOND RANGE IMAGE]

FIRST AREA

SECOND AREA

FIG. 11

[THIRD RANGE IMAGE]

HOST VEHICLE MASKING AREA

FIG. 12

[HOST VEHICLE MASKING DATA]

FIG. 13

[SECOND POINT CLOUD]

[FOURTH RANGE IMAGE]

[HOST VEHICLE MASKING DATA]

[FOURTH POINT CLOUD (NOISE REMOVAL)]

[THIRD POINT CLOUD]

FIG. 14

[HOST VEHICLE MASKING AREA OF
PLURALITY OF PIECES OF SENSING DATA]

0 1 2 … n

[HOST VEHICLE MASKING DATA]

FIG. 15

FIG. 16

START

S1601

USE FIRST SENSING DATA ACQUIRED FROM LIDAR SENSOR TO GENERATE FIRST POINT CLOUD BASED ON REFERENCE POINT OF LIDAR SENSOR

S1602

GENERATE FIRST RANGE IMAGE USING POINT CLOUD

S1603

ADJUST SIZE OF FIRST RANGE IMAGE ACCORDING TO AT LEAST ONE OF ANGLE OF VIEW AND RESOLUTION OF LIDAR SENSOR

S1604

CONVERT REFERENCE POINT OF LIDAR SENSOR INTO VIRTUAL REFERENCE POINT ON GROUND AND THEN GENERATE SECOND RANGE IMAGE WITH VIRTUAL REFERENCE POINT AS CENTER

S1605

EXTRACT FIRST AREA WHERE CONTACT POINT WITH GROUND IS NOT PRESENT AND SECOND AREA WHERE CONTACT POINT WITH GROUND IS PRESENT USING FIRST RANGE IMAGE AND SECOND RANGE IMAGE

S1606

GENERATE THIRD RANGE IMAGE INCLUDING EXTRACTED FIRST AREA AND SECOND AREA

S1607

DETECT AREA WHERE OBJECT IS PRESENT ON THIRD RANGE IMAGE AND GENERATE HOST VEHICLE MASKING DATA

END

FIG. 17

```
                            ┌─────────────┐
                            │    START    │
                            └─────────────┘
                                   │
                                   ▼                              S1701
┌──────────────────────────────────────────────────────────────────┐
│      USE PLURALITY OF PIECES OF FIRST SENSING DATA ACQUIRED        │
│    FROM LIDAR SENSOR TO GENERATE FIRST POINT CLOUD BASED           │
│             ON REFERENCE POINT OF LIDAR SENSOR                     │
└──────────────────────────────────────────────────────────────────┘
                                   │
                                   ▼                              S1702
┌──────────────────────────────────────────────────────────────────┐
│       GENERATE FIRST RANGE IMAGE CORRESPONDING TO EACH OF          │
│   PLURALITY OF PIECES OF FIRST SENSING DATA USING POINT CLOUD      │
└──────────────────────────────────────────────────────────────────┘
                                   │
                                   ▼                              S1703
┌──────────────────────────────────────────────────────────────────┐
│        ADJUST SIZE OF FIRST RANGE IMAGE ACCORDING TO AT LEAST      │
│       ONE OF ANGLE OF VIEW AND RESOLUTION OF LIDAR SENSOR          │
└──────────────────────────────────────────────────────────────────┘
                                   │
                                   ▼                              S1704
┌──────────────────────────────────────────────────────────────────┐
│          TRANSFORM REFERENCE POINT OF LIDAR SENSOR INTO           │
│   VIRTUAL REFERENCE POINT ON GROUND AND THEN GENERATE             │
│        PLURALITY OF SECOND RANGE IMAGES WITH VIRTUAL              │
│             REFERENCE POINT AS REFERENCE                          │
└──────────────────────────────────────────────────────────────────┘
                                   │
                                   ▼                              S1705
┌──────────────────────────────────────────────────────────────────┐
│      EXTRACT FIRST AREA WHERE CONTACT POINT WITH GROUND           │
│   IS NOT PRESENT AND SECOND AREA WHERE CONTACT POINT WITH         │
│    GROUND IS PRESENT USING EACH OF PLURALITY OF FIRST RANGE       │
│        IMAGES AND PLURALITY OF SECOND RANGE IMAGES               │
└──────────────────────────────────────────────────────────────────┘
                                   │
                                   ▼                              S1706
┌──────────────────────────────────────────────────────────────────┐
│       GENERATE PLURALITY OF THIRD RANGE IMAGES INCLUDING          │
│          EXTRACTED FIRST AREA AND SECOND AREA                     │
└──────────────────────────────────────────────────────────────────┘
                                   │
                                   ▼                              S1707
┌──────────────────────────────────────────────────────────────────┐
│   GENERATE HOST VEHICLE MASKING DATA BY COMPARING, FOR            │
│      EACH PIXEL, AREAS WHERE AREAS WITH OBJECT OVERLAP IN         │
│  PLURALITY OF PIECES OF HOST VEHICLE MASKING CANDIDATE DATA       │
└──────────────────────────────────────────────────────────────────┘
                                   │
                                   ▼
                            ┌─────────────┐
                            │     END     │
                            └─────────────┘
```

FIG. 18

```
                    ┌──────────────┐
                    │    START     │
                    └──────┬───────┘
                           │           S1801
  ┌────────────────────────▼──────────────────────────┐
  │ GENERATE SECOND POINT CLOUD USING SECOND SENSING DATA │
  │          ACQUIRED FROM LIDAR SENSOR                 │
  └────────────────────────┬──────────────────────────┘
                           │           S1802
  ┌────────────────────────▼──────────────────────────┐
  │ GENERATE FOURTH RANGE IMAGE USING SECOND POINT CLOUD │
  └────────────────────────┬──────────────────────────┘
                           │           S1803
  ┌────────────────────────▼──────────────────────────┐
  │ OVERLAP HOST VEHICLE MASKING DATA ON FOURTH RANGE  │
  │ IMAGE AND REMOVE HOST VEHICLE AREA FROM FOURTH RANGE │
  │                     IMAGE                          │
  └────────────────────────┬──────────────────────────┘
                           │           S1804
  ┌────────────────────────▼──────────────────────────┐
  │ TRANSFORM FOURTH RANGE IMAGE FROM WHICH HOST       │
  │ VEHICLE AREA HAS BEEN REMOVED INTO THIRD POINT CLOUD │
  └────────────────────────┬──────────────────────────┘
                           │
                    ┌──────▼───────┐
                    │     END      │
                    └──────────────┘
```

Europäisches
Patentamt
European
Patent Office
Office européen
des brevets

## EUROPEAN SEARCH REPORT

**Application Number**

EP 24 21 7939

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/001891 A1 (MAJITHIA CHIRAG [US]) 7 January 2021 (2021-01-07) <br><br> * paragraphs [0010] - [0018], [0080] - [0115], [0141], [0144], [0149], [0150], [0152] * <br> * paragraphs [0194], [0197] - [0199], [0023], [0032], [0036] - [0047], [0079], [0008] * | 1-7, 9-17,19, 20 | INV. <br> G01S13/931 <br> G01S17/931 <br> G06V20/56 |
| A | WO 2023/216470 A1 (HOZON NEW ENERGY AUTOMOBILE CO LTD [CN]) 16 November 2023 (2023-11-16) * paragraphs [0080] - [0099] * | 1-20 | |
| A | CN 116 660 915 A (YUTONG BUS CO LTD) 29 August 2023 (2023-08-29) * paragraphs [0010] - [0014], [0144], [0015] - [0018], [0036] - [0047], [0079], [0008], [0080] - [0089], [0009], [0090] - [0099] * | 1-20 | |

TECHNICAL FIELDS
SEARCHED (IPC)

G01S
G06V

The present search report has been drawn up for all claims

| Place of search | Date of completion of the search | Examiner |
|---|---|---|
| Munich | 7 May 2025 | Metz, Carsten |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7939

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | | Publication date |
|---|---|---|---|---|
| US 2021001891 A1 | 07-01-2021 | US | 2021001891 A1 | 07-01-2021 |
| | | WO | 2021003487 A1 | 07-01-2021 |
| WO 2023216470 A1 | 16-11-2023 | CN | 114842450 A | 02-08-2022 |
| | | WO | 2023216470 A1 | 16-11-2023 |
| CN 116660915 A | 29-08-2023 | NONE | | |

EPO FORM P0459

For more details about this annex : see Official Journal of the European Patent Office, No. 12/82